Europäisches Patentamt

European Patent Office

Office européen des brevets

(11) Veröffentlichungsnummer: **0 266 728**

**A2**

## (12) EUROPÄISCHE PATENTANMELDUNG

(21) Anmeldenummer: 87116115.4

(22) Anmeldetag: 02.11.87

(51) Int. Cl.4: **G01N 21/88** , G01N 21/47

(30) Priorität: 04.11.86 DE 3637477

(43) Veröffentlichungstag der Anmeldung:
11.05.88 Patentblatt 88/19

(84) Benannte Vertragsstaaten:
**DE FR GB IT NL**

(71) Anmelder: **Wacker-Chemitronic Gesellschaft für Elektronik-Grundstoffe mbH**
**Johannes-Hess-Strasse 24**
**D-8263 Burghausen(DE)**

(72) Erfinder: **Hahn, Peter, Dr. Dipl.-Phys.**
**Schopenhauerweg 5**
**D-8263 Burghausen(DE)**
Erfinder: **Grundner, Manfred, Dr. Dipl.-Phys.**
**Marie-Eberth-Strasse 11**
**D-8263 Burghausen(DE)**
Erfinder: **Kerstan, Michael**
**Mozartstrasse 7**
**D-8263 Burghausen(DE)**
Erfinder: **Jacob, Herbert, Dr. Dipl.-Chem.**
**Marienbergstrasse 17**
**D-8263 Burghausen(DE)**

(54) **Verfahren und Vorrichtung zur Ermittlung der Qualität von Oberflächen, insbesondere von Halbleiterscheiben.**

(57) Es werden ein Verfahren zur Ermittlung der Oberflächenqualität insbesondere von Halbleiterscheiben sowie dazu geeignete Vorrichtungen angegeben. Die Scheiben werden unter einem Winkel von durch einen Zerhacker erzeugten Laserpulsen getroffen, und das dabei in Richtung des Einfallslotes abgestrahlte diffuse Streulicht wird gemessen, wobei vorzugsweise durch Verschieben und/oder Drehung der Scheibe die gesamte Scheibenoberfläche abgetastet werden kann. Die nach Maßgabe der Zerhackerfrequenz registrierten Meßwerte ergeben Aufschluß über ansonsten schwer nachweisbare Oberflächenfehler wie beispielsweise Mikrorauhigkeit, Schleier oder Haze.

# Verfahren und Vorrichtung zur Ermittlung der Qualität von Oberflächen, insbesondere von Halbleiterscheiben

Die Erfindung betrifft ein Verfahren zur Ermittlung der Qualität von Oberflächen, insbesondere von Halbleiterscheiben, durch Einstrahlen von Lichtstrahlung auf die Oberfläche und Erfassen des Streulichts sowie Vorrichtungen zur Durchführung des Verfahrens.

Die ständig fortschreitende Miniaturisierung und Steigerung der Packungsdichte bei elektronischen Bauelementen führt, bedingt durch die wachsende Kompliziertheit der Herstellungsprozesse, zwangsläufig auch zu immer höheren Anforderungen an die Qualität der als Ausgangsmaterial eingesetzten Halbleiterscheiben. Neben der chemischen Reinheit finden dabei geometrische Kenngrößen wie z.B. Ebenheit, Planparallelität, Bow-Freiheit, Keiligkeit oder Welligkeit der Scheiben Beachtung. In zunehmendem Maße werden jedoch auch weitere, mikroskopische Bereiche der Oberfläche betreffende Kriterien für die Beurteilung der Oberflächenqualität herangezogen. Bei den in den meisten Fällen eingesetzten polierten Scheiben wird beispielsweise gefordert, daß die Oberfläche frei von Kratzern, Orangenstruktur oder Effekten wie Schleier, Anlauffarben oder Grübchen ist, daß sie kein sog. "subsurface damage" aufweist, d.h. in einer Schicht bis zu etwa 30 $\mu$m unterhalb der Oberfläche keine Punktdefekte, Punktdefektagglomerate oder ähnliche Gitterstörungen zeigt, sowie daß sich müglichst keine Verunreinigungen chemischer Art, z.B. Fremdatome, oder mechanischer Art, z.B. Partikel, nachweisen lassen. In vielen Fällen sind jedoch solche, die Ober flächenqualität beeinträchtigende Fehler nur schwer oder überhaupt nicht nachzuweisen. Beispielsweise kann der bei äußerlich einwandfreien Scheiben manchmal auftretende, oft als "Haze" bezeichnete Schleier als Eintrübung der Oberfläche erst im kollimierten Licht ("Hazelampe") sichtbar gemacht und beurteilt werden. Dabei wird die Beurteilung mit bloßem Auge vorgenommen und ist daher naturgemäß vielen Fehlermöglichkeiten unterworfen.

Es sind daher mehrere Verfahren bekannt geworden, mit deren Hilfe die Oberflächenqualität von Halbleiterscheiben insbesondere im mikroskopischen Bereich ermittelt werden kann.

Gemäß der US-43 14 763 oder der US-PS 43 91 524 wird eine Halbleiterscheibe mit einem Laserstrahl, dessen Wellenlänge ein Eindringen des Lichts durch die Scheibenoberfäche ins Scheibeninnere gestattet, senkrecht bestrahlt und die Intensität des dabei gestreuten Lichts mit Hilfe eines Photodetektors erfaßt. Durch Verschiebung und Rotation des Scheibenträgers kann dabei die gesamte Scheibenoberfäche spiralförmig abgetastet werden. Mit dieser Methode kann vor allem die Kristallperfektion von Silicium-Epitaxieschichten untersucht werden.

In der US-PS 43 52 016 und der US-PS 43 52 017 sind Verfahren beschrieben, gemäß welchen jeweils zwei Lichtstrahlen unterschiedlicher Wellenlänge schräg auf die, ggf. rotierende, zu untersuchende Halbleiterscheibe gerichtet werden. Die reflektierten Strahlen werden mittels Detektoren registriert und aus der jeweils festgestellten Differenz der Intensität kann schließlich auf die Kristallqualität des Materials im Oberflächenbereich geschlossen werden. Oberflächenfehler wie Texturen oder "Haze" werden jedoch mit dieser Methode nicht erfaßt.

Aufgabe der Erfindung war es, ein Verfahren anzugeben, nach welchem sich auf einfache und vielseitig anwendbare Weise die Qualität von Oberflächen, insbesondere von Halbleiterscheiben, insbesondere in bezug auf Oberflächenfehler wie z.B. Mikrorauhigkeiten, Schleier, Haze, Kratzer, Anlauffarben oder Spülflecke, ggf. aber auch in Bezug auf das die Perfektion des Kristallgitters betreffende "subsurface damage" ermitteln, beurteilen und vergleichen läßt.

Gelöst wird die Aufgabe durch ein Verfahren, welches gekennzeichnet ist durch die folgenden Maßnahmen:

a) auf den Untersuchungsbereich auf der Scheibenoberfläche wird zumindest ein Lichtstrahl unter einem Winkel von 15 - 85° zum Einfallslot eingestrahlt

b) jeder Lichtstrahl wird mit einer charakteristischen Frequenz periodisch unterbrochen

c) durch eine Relativbewegung zwischen Lichtstrahl und Halbleiterscheibe wird der Untersuchungsbereich über die Scheibenoberfläche bewegt

d) der dabei vom Untersuchungsbereich ausgehende, in einen Raumausschnitt abgestrahlte Anteil des diffusen Streulichts wird, nach Maßgabe der dem jeweils eingestrahlten Lichtstrahl zugehörigen charakteristischen Unterbrechungsfrequenz winkelabhängig registriert.

Das erfindungsgemäße Verfahren sowie die Vorrichtungen zu seiner Durchführung eignen sich insbesondere zur Untersuchung der Oberflächenqualität von Halbleiterscheiben, und zwar sowohl von Elementhalbleitern, wie z.B. Silicium oder Germanium, oder von Verbindungshalbleitern wie Galliumarsenid, Indiumphosphid oder Cadmiumselenid. Ebenso können auch Scheiben aus oxidischem Material wie Saphir, Spinell oder Gallium-Gadolinium-Granat überprüft werden. Weitere Anwendungsgebiete liegen in der Krontrolle von Epitaxieschichten, die beispielsweise auf oxidische Isolatoren (SOI = silicon-on-insulator-Technik) aufgebracht wurden, oder in Oberflächenuntersuchungen an Gläsern oder Metallen. Im folgenden soll aus Gründen der Vereinfachung nur von Halbleiterscheiben die Rede sein, ohne dadurch jedoch die anderen genannten Einsatzbereiche auszuschließen.

Als Lichtstrahlungsquelle haben sich bei dem erfindungsgemäßen Verfahren insbesondere Laser bewährt, wenngleich auch die Verwendung von anderen intensitätsstarken Lichtquellen wie z.B. Quecksilberdampflampen nicht ausgeschlossen ist. In der Regel werden die Laser im Dauerstrichbetrieb eingesetzt, wobei ihre Wellenlänge nach Maßgabe der Reflexionseigenschaften des zu untersuchenden Halbleitermaterials ausgewählt wird. Beispielsweise hat sich für Siliciumoberflächen die Verwendung von Helium-Neon-Lasern (Wellenlänge ca. 632 nm) oder Helium-Cadmium-Lasern (Wellenlänge ca. 442 nm und 325 nm) bewährt, wobei ggf. auch die je nach Wellenlänge verschiedenen Eindringtiefen der Strahlen zu berücksichtigen sind, aufgrund derer auch tieferliegende Oberflächenbereiche der Scheiben einer Untersuchung zugänglich gemacht werden können. In der Regel wird der Laser im Grundmodebetrieb gefahren, obwohl grundsätzlich auch der Einsatz höher indizierter Schwingungszustände nicht ausgeschlossen ist.

Gegebenenfalls kann die Empfindlichkeit des Verfahrens auch durch den Einsatz von polarisiertem Licht erhöht werden, z.B. in dem Polarisationsfilter in den Strahlengang des einfallenden Strahles und/oder des Streulichts gebracht werden.

Naturgemäß kann die Oberflächenqualität um so genauer ermittelt werden, je kleiner der Untersuchungsbereich, d.h. der Bereich der Scheibenoberfläche, der jeweils vom Lichtstrahl getroffen wird, gewählt wird. Andererseits erhöht sich damit auch die zum Abtasten der gesamten Scheibenoberfläche benötigte Zeitdauer. Zweckmäßig wird daher bei einer beabsichtigten genauen Oberflächenuntersuchung der Strahl auf einen engen Untersuchungsbereich fokussiert, dessen Fläche im allgemeinen einer Kreisfläche von ca. 1 μm bis 1 mm Durchmesser entspricht. Bei einer schnellen Überprüfung großer Oberflächenbereiche, wie sie etwa bei Routinekontrollen im Rahmen des Produktionsprozesses, beispielsweise zur Überwachung von Poliervorgängen, erforderlich sind, können beispielsweise durch Strichfokussierung auch demgegenüber größere Untersuchungsbereiche, deren Maße den Größenordnungsbereich des Scheibenradius oder -durchmessers erreichen können, zum Einsatz kommen. Insbesondere in diesen Fällen kann es auch nötig sein, zur Sicherung einer ausreichenden Intensität des gestreuten Lichtes (und damit der Meßsignale) auch die reflektierten Lichtstrahlen durch ein System von Spiegeln auf den Untersuchungsbereich zurückzulenken.

Der Einfallswinkel, unter dem bei dem Verfahren der Lichtstrahl auf die Scheibenoberfläche eingestrahlt wird, beträgt 15 bis 85°, vorzugsweise 35 bis 70°, bezogen auf das auf die geometrischideale Oberfläche der Scheibe gefällte Einfallslot. Der Winkel kann in der bekannten Weise z.B. entweder durch die Orientierung der Strahlungsquelle oder aber durch Spiegel eingestellt werden. Unter der geometrischidealen Oberfläche ist dabei die Begrenzung des geometrisch vollkommen gedachten Körpers zu verstehen, die beispielsweise bei einer Halbleiterscheibe eine vollkommen ebene Fläche darstellen würde. Demgegenüber weist die Istoberfläche selbst im Falle polierter Halbleiterscheiben mehr oder weniger große Abweichungen in der Oberflächenfeinstruktur auf.

Der auf die Scheibenoberfläche gerichtete Licht, insbesondere Laserstrahl wird vor seinem Auftreffen erfindungsgemäß mit einer charakteristischen Frequenz periodisch unterbrochen. Zu diesem Zweck lassen sich beispielsweise sogenannte Chopper (Zerhacker) einsetzen, z.B. regelmäßig unterteilte, mit einer charactkeristischen Geschwindigkeit rotierende Scheiben, welche in den Strahlengang gebracht werden und dabei abwechselnd mit einer bestimmten Frequenz für den Strahl durchlässig sind bzw. ihn abfangen. Dieselbe Frequenz weist auch das durch den Strahl verursachte Streulicht auf, das somit bei der Registrierung eindeutig zugeordnet werden kann. Der gleiche Effekt läßt sich auch z.B. mit Hilfe von gepulsten Lasern erzielen. Daher ist es möglich, auf den Untersuchungsbereich gleichzeitig insbesondere zwei oder mehrere Lichtstrahlen, vorteilhaft mit unterschiedlichen Wellenlängen, einwirken zu lassen, sofern sie mit unterschiedlichen charakteristischen Frequenzen zerhackt werden, da dann eine eindeutige Zuordnung jedes Meßsignals zum verursachenden Strahl möglich ist. Gleichzeitig läßt sich auf diese Weise sowohl bei Einsatz eines oder mehrerer Lichtstrahlen der Einfluß des Tageslichts oder von Fremdlichtquellen ausschalten, und auf die aufwendige Messung in Dunkelräumen oder besondere Abdunklungsmaßnahmen kann verzichtet werden.

Voraussetzung dafür ist jedoch, daß eine Registriereinrichtung bereitgestellt wird, die es gestattet, aus einer Vielzahl von Signalen jeweils diejenigen herauszugreifen und zu erfassen, die einer bestimmten, vorgegebenen Periodizität gehorchen, wie beispielsweise der durch den Zerhacker vorgegebenen periodischen Unterbrechung. Diese Anforderung wird z.B. von kommerziell erhältlichen Registriereinrichtungen wie etwa Meßverstärkern erfüllt, die über die sogenannte "Lock-in"-Technik verfügen, eine in der Meßtechnik, insbesondere zur Erfassung wenig intensiver, von starken Nebensignalen (Rauschen) überlagerter Signale allgemein gebräuchliche und dem Durchschnittsfachmann geläufige Meßmethode.

Handelsübliche Geräte wie beispielsweise Photodetektoren oder Photomultiplier können auch zur Messung des von der Halbleiterscheibe ausgehenden Streulichts eingesetzt werden. Mit besonderem Vorteil werden Geräte verwendet, die eine winkelabhängige Messung erlauben. Solche Meßinstrumente fangen nicht das gesamte, sondern lediglich das in einen bestimmten Raumausschnitt abgestrahlte Streulicht auf und wandeln es dann in das Meßsignal um. Dabei hat es sich als vorteilhaft erwiesen, von dem vom bestrahlten Bereich grundsätzlich nach allen Richtungen abgestrahlten Streulicht nur denjenigen Anteil aufzufangen, der in einem bestimmten, das Einfallslot in der Form eines Kegels oder eines beispielsweise spaltförmigen Ausschnitts daraus umgebenden Raumbereich gerichtet ist. Der Öffnungswinkel des Kegels wird zweckmäßig auf etwa 1 bis 45°, vorzugsweise 10 bis 30° eingestellt. Beispielsweise durch Änderung der Entfernung des Meßgerätes zum Untersuchungsbereich oder durch Aufweiten oder Verengen der Meßöffnung kann der Öffnungswinkel nach Maßgabe der zur Verfügung stehenden Streulichtintensität optimiert werden. Gemäß einer Weiterbildung des Erfindungsgedankens ist auch vorgesehen, den Detektor, z.B. mittels Schrittmotoren, schwenkbar anzuordnen und somit die Streulichtintensität unter anderen, vom Bereich um das Einfallslot abweichenden Winkeln zu erfassen.

In vielen Fällen hat es sich auch bewährt, das in den ausgewählten Sektorabgestrahlte Streulicht durch optische Hilfsmittel wie etwa Linsen zu sammeln und auf das Meßgerät zu fokussieren. Zweckmäßig ist diese Optik gleichzeitig auf den von Laserstrahl getroffenen Untersuchungsbereich auf der Halbleiterscheibe fokussiert. Gegebenenfalls können auch zur Selektion bestimmter Wellenlängen, geeignete Filter, z.B. Monochromatoren oder Interferenzfilter vorgeschaltet werden.

Als Probenträger werden günstig solche Haltevorrichtungen eingesetzt, die eine kontrollierte Relativbewegung der zu untersuchenden Halbleiterscheibe bezüglich des in der Richtung unveränderten einfallenden Strahles gestatten, beispielsweise durch Rotation und/oder Translation in x-y-Richtung, um die gewünschten Bereiche der Scheibenoberfläche untersuchen zu können.

Geeignete Probeträger, die diese Bewegungen ermöglichen und bei denen die z.B. mit Hilfe einer Saugpinzette aufgelegten Scheiben beispielsweise mittels einer Vakuumhaltevorrichtung (Vakuum-Chuck") fixiert werden, sind bekannt und werden z.B. bei der mikroskopischen Kontrolle von Halbleiteroberflächen eingesetzt. In den meisten Fällen verfügen solche Probenträger auch über Möglichkeiten, die Position der Halbleiterscheibe so einzustellen, daß das vom Untersuchungsbereich ausgehende Einfallslot in den zentralen Bereich des Meßinstrumentes bzw. einer vorgeschalteten Sammellinse gerichtet ist. Grundsätzlich ist es aber auch möglich, bei ruhender Scheibe die Richtung des einfallenden Lichtstrahles zu verändern und dadurch die Scheibenoberfläche abzutasten. Eine derartige Verfahrensweise ist jedoch schon wegen der erforderlichen Koordination dieser Bewegung mit dem Meßinstrument mit erhöhtem apparativem Aufwand verbunden.

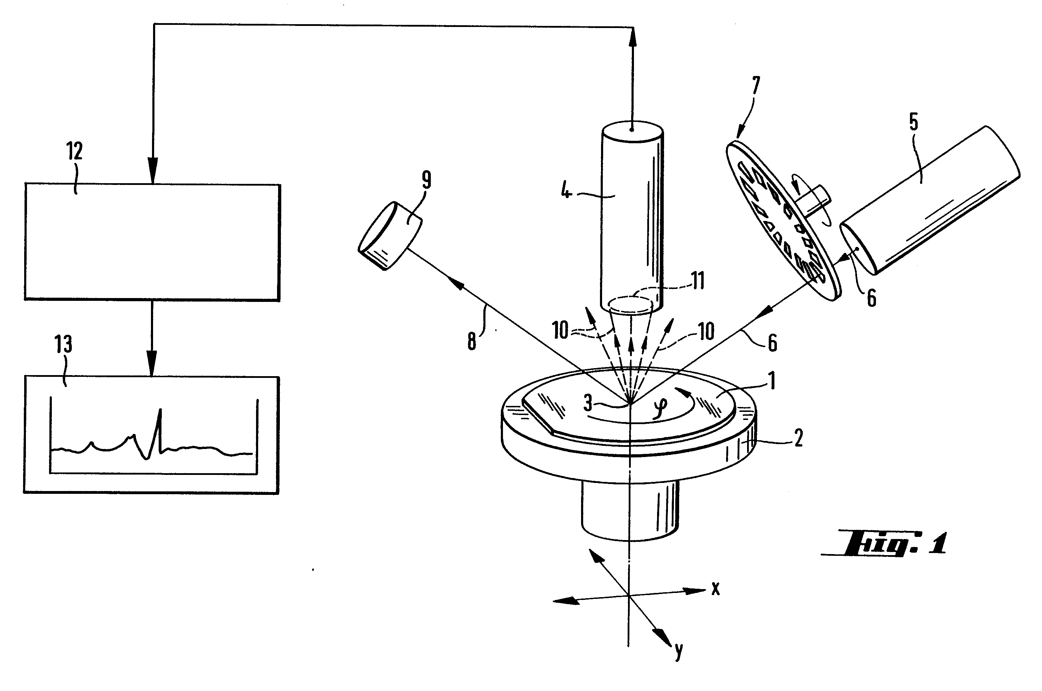

Im folgenden wird das erfindungsgemäße Verfahren anhand der Figur 1, welche schematisch eine mögliche Anordnung zu seiner Durchführung zeigt, beispielhaft näher erläutert.

Zunächst wird die Halbleiterscheibe 1 auf den Probenträger 2 aufgelegt, welcher im vorliegenden Fall drehbar und zugleich in einer Ebene (x-y-Richtung) verschiebbar ist. Der Probenträger 2 ist so justiert, daß ein auf die geometrisch ideale Oberfläche der aufgelegten Scheibe im vorgesehenen Untersuchungsbereich 3 gefälltes Lot auf das Meßinstrument 4, z.B. einen Photoverstärker (Multiplier), trifft, und zwar möglichst genau in den Bereich von dessen Mittelachse. Selbstverständlich kann diese Bedingung auch durch entsprechendes Ausrichten des Meßinstrumentes 4 selbst erfüllt werden. In den Untersuchungsbereich 3 wird mit Hilfe einer Lichtquelle 5, z.B. einer Laserquelle, eine Lichtstrahl 6 eingestrahlt, der mittels eines Zerhackers 7 mit einer charakteristischen Frequenz periodisch unterbrochen wird. Während der reflektierte Strahl von einer Abschirmung 9 aufgefangen wird, trifft die entstehende diffuse Streustrahlung 10 auf die beispielsweise runde oder spaltförmige, im Grenzfall lochförmige Meßöffnung 11 des Meßinstrumentes 4, wobei durch deren lichte Weite und/oder Abstand vom Untersuchungsbereich der Öffnungswinkel des einfallenden Streulichtkegels bestimmt wird.

In einer gleichfalls möglichen Anordnung kann anstelle der Abschirmung 9 ein Spiegel sowie im Gang des einfallenden Strahles zusätzlich ein halbdurchlässiger Spiegel vorgesehen werden, wobei beide Spiegel so eingestellt werden, daß die Lichtstrahlen in den Untersuchungsbereich 3 zurückreflektiert werden. Ein solches Spiegelsystem kann insbesondere dann eingesetzt werden, wenn eine hohe Intensität des auf den Untersuchungsbereich 3 einwirkenden Lichtes gefordert ist.

Gemäß einer Weiterbildung des Erfindungsgedankens können auch zusätzlich eine zweite oder mehrere Lichtquellen bzw. Laserkanonen vorgesehen werden, deren Strahlen, welche vorteilhaft verschiedene Wellenlängen aufweisen, ebenfalls auf den Untersuchungsbereich gerichtet sind. Das unterschiedliche, durch die jeweilige Wellenlänge vorgegebene Reflexions-und Eindringverhalten der verschiedenen Lichtstrahlen wirkt sich auch auf das entstrehende Streulicht aus und gestattet daher die Gewinnung zusätzlicher Informationen, beispielsweise eine Differenzierung zwischen Oberflächen- und Volumendefekten.

Aus dem Meßinstrument 4 werden die gewonnenen Signale in das Erfassungsgerät 12 weitergeleitet, wo mit Hilfe der soge nannten "Lock-in"-Technik aus der Fülle der ankommenden Signale diejenigen herausgefiltert werden, die mit der durch den Zerhacker 7 vorgegebenen charakteristischen Frequenz unterbrochen sind. Die entsprechenden Meßwerte können dann beispielsweise mit Hilfe eines Schreibers 13 registriert werden, z.B. in Form eines Meßprotokolles, in dem die jeweils gemessene Streulichtintensität einem bestimmten Drehwinkel und/oder einer bestimmten xy-Position der untersuchten Halbleiterscheibe zugeordnet wird. Die Eichung der Skala kann beispielsweise mit Hilfe einer Referenzscheibe, welche bestimmte und bekannte Oberflächeneigenschaften aufweist, vor Beginn der eigentlichen Messung vorgenommen werden. Oftmals können solche Standards auch aus Durchschnittswerten einer größeren Anzahl untersuchter Halbleiterscheiben abgeleitet werden, z.B. wenn es sich um Routinekontrollen der Schleierfreiheit von polierten Halbleiterscheiben im Rahmen des Produktionsprozesses handelt.

Im Verlauf der Messung werden die jeweils vorgesehenen Oberflächenbereiche der zu überprüfenden Halbleiterscheibe in die Meßposition gebracht. Dies kann beispielsweise dadurch geschehen, daß die Oberfläche zeilenweise abgetastet wird. Eine andere Möglichkeit besteht darin, die Scheibe entlang einer Linie schrittweise zu verschieben und nach jeder Verschiebung eine Drehung der Scheibe um 360° vorzunehmen. Dadurch lassen sich insbesondere gerichtete Oberflächenstörungen bestimmen. In vielen Fällen, wie beispielsweise zum Nachweis von bei Poliervorgängen bisweilen auftretender Rillenbildungen, hat es sich als ausreichend erwiesen, die Oberfläche durch mehrere, vorteilhaft zwei in einem bestimmten Winkel zueinander durch den gewählten Oberflächenbereich führende Meßserien zu untersuchen.

Mit besonderem Vorteil wird das Verfahren an hochveredelten, beispielsweise polierten, Oberflächen eingesetzt, und zwar bevorzugt zur Überprüfung auf mit herkömmlichen Mitteln, wie z.B. Mikroskop oder Hazelampe, schwer oder nur mit ungenügender Zuverlässigkeit nachweisbare Oberflächenfehler, also z.B. Mikrorauhigkeiten, Schleier, welche ggf. gerichtet sein können, Haze, Anlauffarben, Spülflecke, Kratzer, Partikel oder ggf. auch knapp unterhalb der Oberfläche im Scheibeninneren auftretende Fehler wie etwa Punktdefekte. Andere Anwendungsmöglichkeiten liegen beispielsweise in der Oberflächenkontrolle nach Prozeßschritten wie Ätzvorgängen, Oxidationen oder Ionenimplantationen. Gleichermaßen kann eine zu Getterzwecken erfolgte Behandlung der Scheibenrückseite, beispielsweise gemäß US-PS 458 777 1 oder EP-B-22 960, überwacht und ggf. quantifiziert werden.

Das Verfahren wird nachstehend anhand der Ausführungsbeispiele näher erläutert.

<u>Beispiel 1</u> :

Die Untersuchung wurde in einer gemäß der Fig. 1 gestalteten Anordnung durchgeführt. Die zu untersuchenden Halbleiterscheiben wurden mit Saugpinzetten jeweils auf den Vakuumchuck des mittels Gleichstrommotoren in xy-Richtung verschiebbaren und drehbaren Probenträgers aufgelegt, wobei darauf geachtet wurde, daß eine zur Orientierung dienende Anschnittkante der Scheibe immer in dieselbe Position zu liegen kam. Auf die Scheiben wurde unter einem Winkel von ca. 55° zum Einfallslot ein Strahl einer dauerstrichbetriebenen Helium-Neon-Lasserlichtquelle (Wellenlänge 632.8 nm) eingestrahlt und durch einen Chopper in eine Abfolge von ca. 30 Lichtpulsen pro Sekunde zerhackt. Der bestrahlte Bereich auf der Scheibenoberfläche hatte annähernd Kreisform und besaß einen Durchmesser von ca. 0,5 mm. Der von der Scheibenoberfläche reflektierte Strahl wurde mit Hilfe eines Strahlungsschirmes abgefangen. Das vom Untersuchungsbereich in einen das Einfallslot umgebenden Kegel mit ca. 20° Öffnungswinkel abgestrahlte diffuse Streulicht wurde mittels einer entsprechend fokussierten Sammellinse auf die Meßfläche eines Photomultipliers gelenkt. Aus der Gesamtmenge der anfallenden Signale wurden - schließlich in einem Erfassungsgerät diejenigen mit einer Abfolge von ca. 30 Pulsen pro Sekunde herausgefiltert und mit Hilfe eines x-y-Schreibers aufgezeichnet, so daß eine Korrelation zwischen der jeweils gemessenen Streulichtintensität und der Position des Untersuchungsbereiches auf der Scheibenoberfläche hergestellt werden konnte.

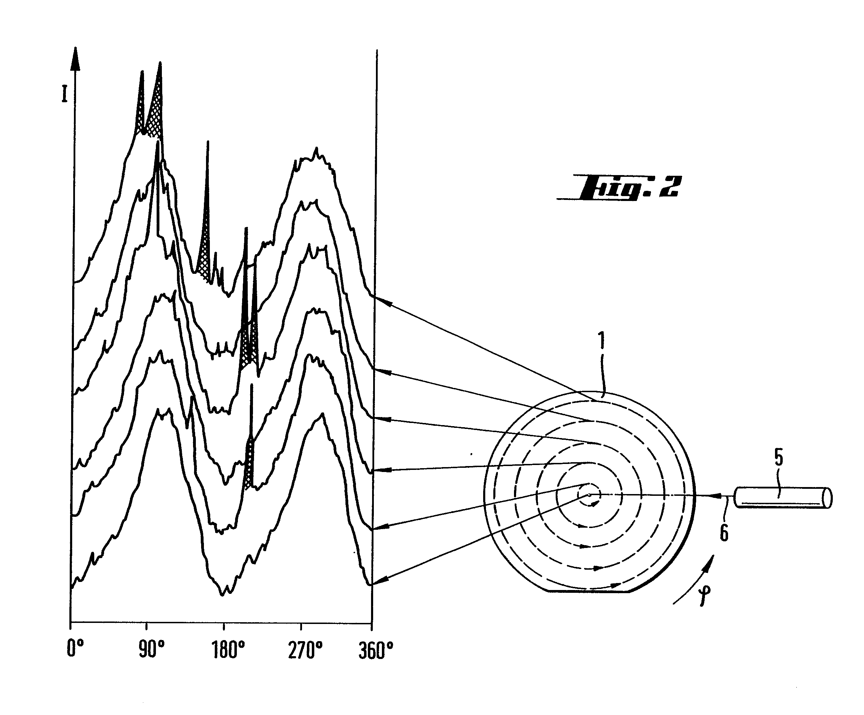

Beim Meßvorgang wurde jeweils eine durch Augenschein als einwandfrei klassifizierte polierte Siliciumscheibe mit ca. 10 cm Durchmesser auf den Probenträger aufgelegt und dieser in eine Position gebracht, in der der einfallende Laserstrahl den Mittelpunkt der Scheibe traf. Nun wurde die Scheibe um 360° gedreht und dabei die entsprechende Meßkurve aufgezeichnet. Danach wurde der Probenträger mit der Scheibe senkrecht zum einfallenden Strahl um ca. 5 mm verschoben, um 360° gedreht und dabei auch diese Meßkurve aufgezeichnet. Daraufhin wurde die Scheibe in derselben Richtung um weitere ca. 10 mm verschoben, erneut gedreht und die Meßkurve aufgezeichnet. Dieser Vorgang wurde noch dreimal wiederholt, bis der Scheibenrand erreicht war. Eine typische Meßkurvenschar ist in Fig. 2 dargestellt.

Dabei sind schematisch die verschiedenen Untersuchungsbereiche auf der Scheibe 1 dargestellt, die durch Verschiebung und Drehung von dem vom Laser 5 ausgesandten Strahl bestrichen wurden. Den 6 verschiedenen Untersuchungsbereichen sind 6 Meßkurven zugeordnet, in denen jeweils die bei einer Scheibendrehung um 360° auftretende Streulichtintensität in Abhängigkeit vom Drehwinkel aufgetragen ist. Die durch Schraffierung gekennzeichneten Kurventeile deuten dabei auf der Scheibenoberfläche vorhandene Partikel hin.

Deutlich ist ferner zu sehen, daß das Streuvermögen der äußerlich einwandfrei polierten Scheibenoberfläche zwischen im 90°-Winkel zueinander liegenden Extremwerten schwankt. Daraus kann geschlossen werden, daß die vorliegende Scheibe bei nicht optimalen Bedingungen poliert worden war, so daß die Oberflächenqualität zu wünschen läßt.

Beispiel 2 :

Eine polierte, mit einer zur Orientierung dienenden Anschnittkante versehene Siliciumscheibe (Durchmesser ca. 10 cm) wurde zur Hälfte in entionisiertes Wasser getaucht, so daß die Trennlinie zwischen nassem und trockenem Bereich parallel zur Anschnittkante verlief. Anschließend wurde die Oberfläche trochengeschleudert und einem Oxidationsvorgang bei 1000° C in trockenem Sauerstoff unterworfen, bis eine Oxidschicht von ca. 700 Å Dicke erreicht war. Diese wurde schließlich mit Flußsäure abgelöst.

Die so vorbehandelte Scheibe wurde nun auf den Probenträger einer gemäß der Fig. 1 gestalteten Meßanordnung aufgelegt, die jedoch mit zwei Laserlichtquellen (Arbeitswellenlänge 632.8 nm bzw. 325 nm) ausgerüstet war. Diese wurden so justiert, daß beide Laserstrahlen senkrecht zur Anschnittkante einfielen und im gleichen, annähernd kreisrunden und einen Durchmesser von ca. 0.4 mm aufweisenden Meßbereich auf der Scheibe auftrafen. Der Einfallswinkel des längerwelligen Strahls betrug ca. 40°, die Zerhackerfrequenz ca. 30 Lichtpulse pro Sekunde. Der andere Strahl fiel unter einem Winkel von ca. 55° auf die Scheibe ein und wurde auf eine Frequenz von ca. 40 Lichtpulsen pro Sekunde zerhackt. Der mittels des Photomultipliers erfaßte Kegel des abgestrahlten diffusen Streulichtes besaß einen Öffnungswinkel von ca. 25°.

Beim eigentlichen Meßvorgang wurde die Scheibe durch Verschieben des Probenträgers mittels Schrittmotor entlang einer senkrecht zur Anschnittkante durch die Scheibenmitte verlaufenden Linie zunächst mit dem langwelligen (roten), dann mit dem kurzwelligen (blauen) Strahl abgetastet.

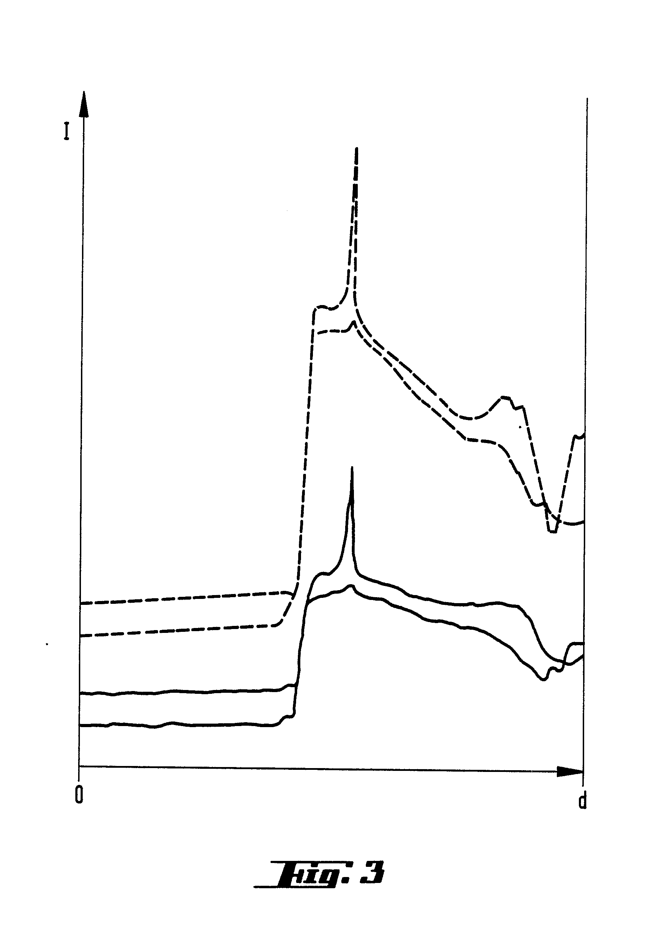

Danach wurde die Scheibe um ca. 2 mm nach links verschoben und der Vorgang wiederholt, um einen weiteren Bereich der Scheibe parallel zur ersten Meßlinie zu untersuchen. Die erhaltenen, aus Gründen der Deutlichkeit gegeneinander verschobenen Meßkurven sind in der Fig. 3 dargestellt, in welcher als Ordinate die ausgehend von einem gleichen Ausgangswert jeweils gemessene Streulichtintensität I gegen die entsprechende Position des Meßbereiches entlang der Meßlinie d als Abszisse aufgetragen ist. Dabei entspricht die gestrichelte Liniengruppe der mit dem blauen, die durchgezogenen Linien der mit dem roten Laserstrahl ermittelten Streulichtintensität, und die jeweils obere Linie der durch die Scheibenmitte, die untere der danebenen verlaufenden Meßlinie.

Deutlich ist zu erkennen, daß die in Wasser getauchte Scheibenhälfte im Vergleich zur unbehandelten eine erheblich geringere Oberflächenrauhigkeit aufweist. Gleichfalls zeigt sich, daß mit Hilfe des blauen Lasers aufgrund seiner geringeren Eindringtiefe Feinstrukturen auf der Oberfläche schärfer herausgearbeitet werden können. Aus dem parallelen Verlauf entsprechender Meßkurven kann darauf geschlossen werden, daß sich die Defekte hauptsächlich im Bereich unmittelbar an der Scheibenoberfläche befinden.

Beispiel 3:

Eine polierte Siliciumscheibe (Durchmesser ca. 10 cm, p-Dotierung) wurde in einem Epitaxie-Reaktor durch Gasphasenepitaxie mit einer ca. 10 μm dicken, einkristallinen Siliciumschicht (n-Dotierung) versehen.

Die Oberfläche der Scheibe wurde anschließend in einer dem Beispiel 2 entsprechenden Meßanordnung und mit den gleichen Verfahrensparametern untersucht, mit dem Unterschied, daß in diesem Fall der rote und der blaue Laserstrahl gleichzeitig auf die Scheibe eingestrahlt und die entsprechenden Meßsignale mittels der Lock-in-Technik gleichzeitig registriert wurden. Dabei wurde nicht die gesamte Scheibe untersucht, sondern nur in der Scheibenmitte ein rechteckiger Bereich von 35 mm Länge und 10 mm Breite, durch den im Abstand von 2 mm 6 zueinander parallele Meßlinien gelegt wurden.

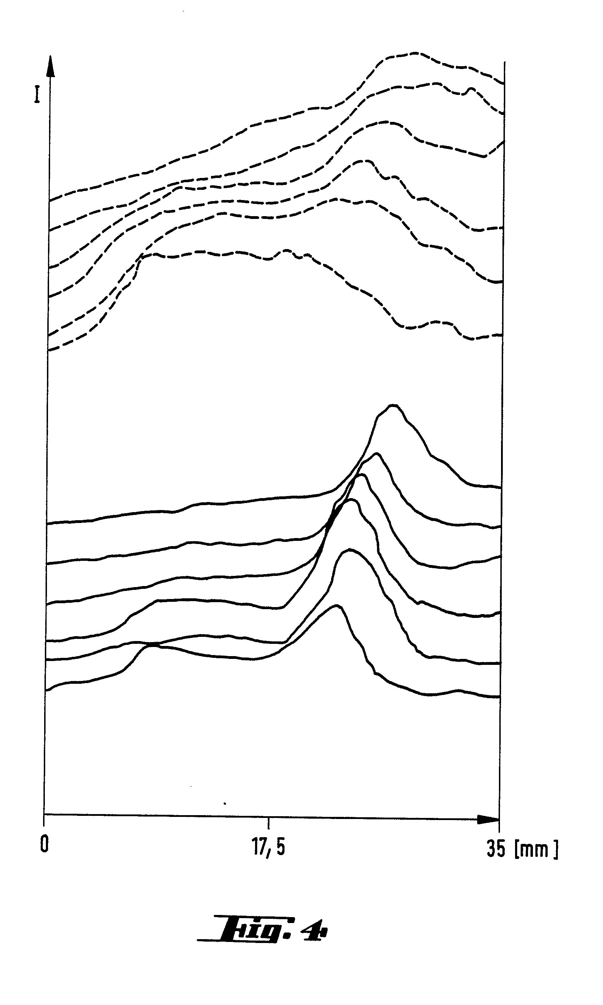

Die erhaltenen Meßkurven sind in der Fig. 4 dargestellt. Dabei entspricht die gestrichelte Kurvenschar den mit der blauen, die durchgezogene Kurvenschar den mit der roten Laserlichtquelle erhaltenen Streulichtintensitäten I, die als Ordinate gegen die jeweilige Meßposition auf der Scheibenoberfläche innerhalb des 35 mm langen Meßbereiches aufgetragen sind. Der Ausgangspunkt der Kurven am linken Rand der Darstellung entspricht jeweils dem gleichen Anfangswert der Streulichtintensität; die einzelnen Kurven wurden lediglich aus Gründen der Übersichtlichkeit gegeneinander verschoben, so daß die unterste Kurve der ersten, die oberste der letzten Messung entspricht.

Während die mit dem kurzwelligen Laserstrahl erhaltene Kurvenschar im Bereich von etwa 20 bis 30 mm einen deutlichen Defekt an der Oberfläche des untersuchten Scheibenausschnittes erkennen läßt, deutet die mit dem eine größere Eindringtiefe aufweisenden langwelligen Laserstrahl erhaltene Kurvenschar im Bereich von ca. 10 bis 20 mm auf unterhalb der Scheibenoberfläche liegende Störungen hin.

**Ansprüche**

1. Verfahren zur Ermittlung der Qualität von Oberflächen, insbesondere von Halbleiterscheiben durch Einstrahlen von Lichtstrahlung auf die Oberfläche und Erfassen des Streulichts **gekennzeichnet durch** die folgenden Maßnahmen:

a) auf den Untersuchungsbereich auf der Scheibenoberfläche wird zumindest ein Lichtstrahl unter einem Winkel von 15 bis 85° zum Einfallslot eingestrahlt

b) jeder Lichtstrahl wird mit einer charakteristischen Frequenz periodisch unterbrochen

c) durch eine Relativbewegung zwischen Lichtstrahl und Halbleiterscheibe wird der Untersuchungsbereich über die Scheibenoberfläche bewegt

d) der dabei vom Untersuchungsbereich ausgehende, in einen Raumausschnitt abgestrahlte Anteil des diffusen Streulichts wird, nach Maßgabe der dem jeweils eingestrahlten Lichtstrahl zugehörigen charakteristischen Unterbrechungsfrequenz winkelabhängig registriert.

2. Verfahren nach Anspruch 1, **dadurch gekennzeichnet,** daß als Lichtstrahlen Laserstrahlen eingesetzt werden.

3. Verfahren nach Anspruch 2, **dadurch gekennzeichnet,** daß ein Laserstrahl mit einer der gewünschten Eindrigtiefe entsprechenden Wellenlänge ausgewählt wird.

4. Verfahren nach den Ansprüchen 1 bis 3, **dadurch gekennzeichnet,** daß der einfallende Strahl und/oder das diffuse Streulicht polarisiert werden.

5. Verfahren nach den Ansprüchen 1 bis 4 **dadurch gekennzeichnet,** daß der Untersuchungsbereich auf einen einer Kreisfläche von 1 µm bis 1 mm Durchmesser entsprechenden Flächenausschnitt eingestellt wird.

6. Verfahren nach einem oder mehreren der Ansprüche 1 bis 5, **dadurch gekennzeichnet,** daß die Relativbewegung durch eine lineare Verschiebung der Halbleiterscheibe in der durch das Einfallslot bestimmten Ebene erzielt wird.

7. Verfahren nach einem oder mehreren der Ansprüche 1 bis 6, **dadurch gekennzeichnet,** daß die Relativbewegung durch eine Rotation der Halbleiterscheibe in der durch das Einfallslot bestimmten Ebene erzielt wird.

8. Vorrichtung zur Durchführung des Verfahrens nach einem oder mehreren der Ansprüche 1 bis 7, **gekennzeichnet durch** mindestens eine einen Lichtstrahl aussendende Lichtquelle, einen die Einbringung und Verschiebung des zu untersuchenden Objektes in den Strahlengang gestattenden Probenträgers, einen jeweils zwischen Probenträger und Lichtquelle angeordneten, jeden Lichtstrahl mit einer charakteristischen Frequenz periodisch unterbrechenden Zerhacker, ein das in den das Einfallslot umgebenden Raumbereich abgestrahlte Streulicht erfassendes Meßgerät sowie ein Gerät zur Registrierung der Meßsignale.

**Fig. 1**

Fig. 2

**Fig. 3**

Fig. 4